# EUROPEAN PATENT SPECIFICATION

(11) **EP 3 246 225 B1**
(45) Date of publication and mention of the grant of the patent: **02.01.2019**
(21) Application number: 17170214.5
(22) Date of filing: 09.05.2017
(51) Int. Cl.: B62D 1/10, B62D 1/187

(54) **MULTIFUNCTIONAL TILTABLE STEERING COLUMN FOR INDUSTRIAL VEHICLES**
MULTIFUNKTIONELLE VERSCHWENKBARE LENKSÄULE FÜR INDUSTRIELLE FAHRZEUGE
COLONNE DE DIRECTION TILTABLE MULTIFONCTIONNELLE POUR VÉHICULES INDUSTRIELS

(30) Priority: 19.05.2016 IT UA20163600
(43) Date of publication of application: 22.11.2017
(73) Proprietor: FINAN.CO. S.r.l, 20056 Trezzo Sull'Adda - Milano (IT)
(72) Inventor: Barbieri, Walter, 24040 Filago (BG) (IT)
(74) Representative: Giuli, Maurizio Mario Galdino

(56) References cited:
- EP-A1- 2 769 900
- WO-A1-2005/100097
- WO-A1-2006/081813
- DE-A1- 3 409 987
- DE-A1-102006 003 457
- JP-A- H01 148 640

## Description

The present invention relates to a multifunctional tiltable steering column for industrial vehicles.

In industrial vehicles, for example tractors, the steering column is of particular importance as it involves the driving and handling of the industrial vehicle in its movements, in particular for changing direction.

Various types of steering columns are known and used, consisting of a whole series of elements, some of which are obtained through complex machining, formation and assembly operations.

These columns provide complex connections and also couplings of multiple devices for effecting movements and necessary adjustments, for example in height, inclination, etc.

The presence of provisions for allowing the inclination and adjustment in height of the steering column creates encumbrances and complex technical solutions which also entail high costs.

Furthermore, it should be remembered that the column carries the steering wheel constrained to the same, which in some ways, creates an obstacle for the correct and complete viewing of the dashboard and all its functions and signals useful when using an industrial vehicle, such as for example, a tractor with all its problems.

In addition, most steering columns, in spite of studies for finding an ergonomically valid technical solution in the various directions, in reality do not meet the demands of the driver.

Other steering columns are in use, which however are equipped with a whole series of mechanical systems/also planetary gearings. These, moreover, are normally relatively costly and bulky solutions.

In the field of industrial vehicles and in particular agricultural vehicles, there is an increasing need for improved ergonomics especially on important and frequently-used commands.

All of these problems consequently result in the unavailability of a valid and comfortable steering column for whoever must drive an industrial vehicle for various hours during the day, also perhaps on difficult routes such as those of an agricultural type for tractors.

The general objective of the present invention is to provide a tiltable steering column for industrial vehicles which is capable of solving the above-mentioned drawbacks of the known art in an extremely simple, economical and particularly functional manner.

A further objective of the present invention is to provide a steering column for industrial vehicles which is as simple as possible and easy to build.

Another objective of the present invention is to provide a tiltable steering column for industrial vehicles which is high-quality and easy to use.

Yet another objective of the present invention is to provide a steering column for industrial vehicles which allows an easy observation of the various signallings for the driver, in particular those present on the dashboard.

A further objective of the present invention is to provide a steering column for industrial vehicles which can be moved in the required position with the least possible number of interventions by the driver, if possible automatically.

EP-A-2 769 900 discloses a multifunctional steering column having the features of the preamble of claim 1.

The structural and functional characteristics of the present invention and its advantages with respect to the known art will appear even more evident from the following description, referring to the enclosed schematic drawings, which show an embodiment example of the invention itself. In the drawings:
- figure 1 is a perspective view of a steering column according to the invention positioned in correspondence with the driving seat;
- figure 2 shows a similar view to that of figure 1 in a disengaged position to facilitate access for the driver;

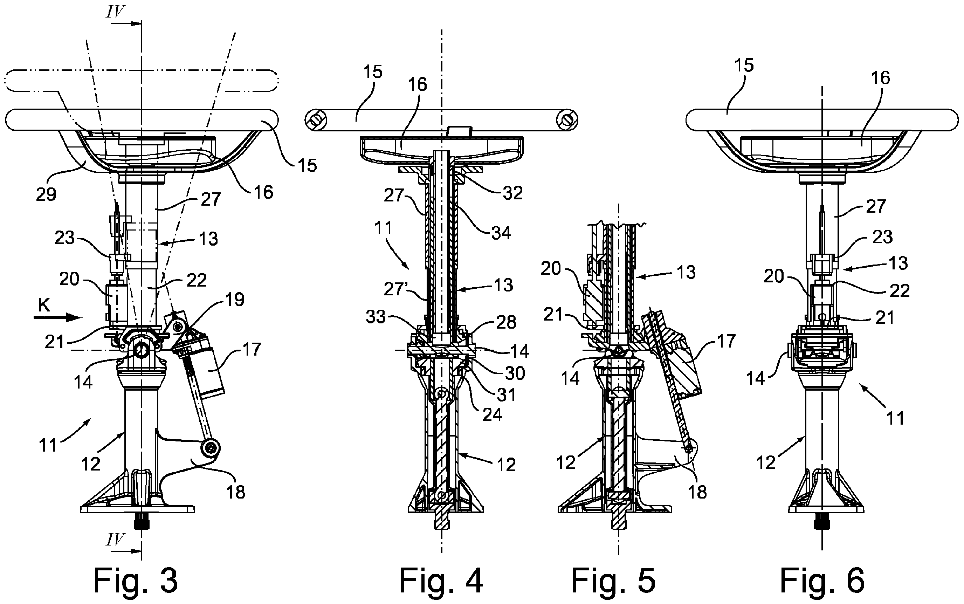

- figure 3 shows a raised side view of the column of figure 1;
- figure 4 shows a longitudinal section of the steering column obtained according to the line IV-IV of figure 3;
- figure 5 shows a section of a part of the column shown in figure 3;
- figure 6 shows a raised side view of the column according to the arrow along the arrow K of figure 3;

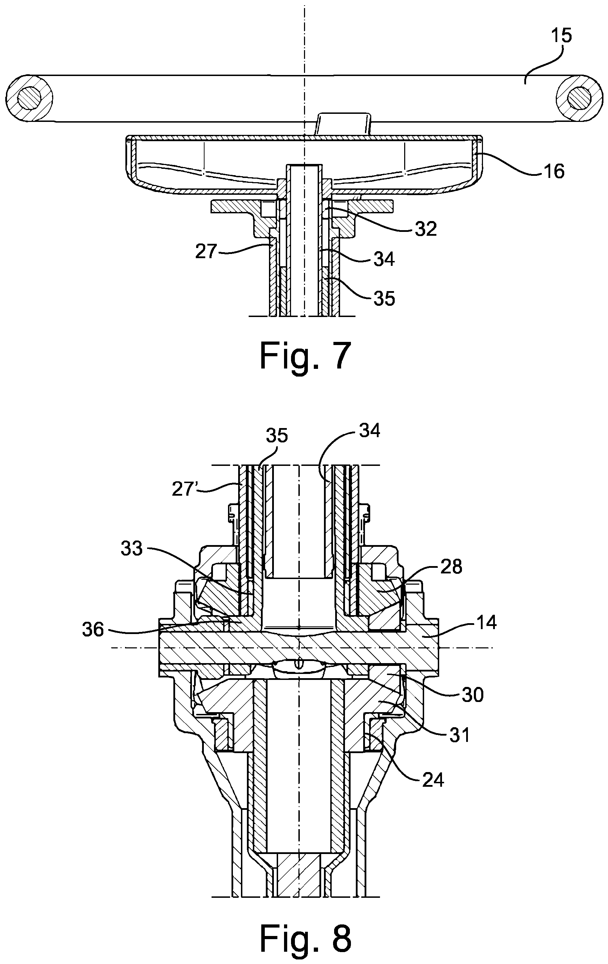

- figures 7 and 8 show enlarged sectional details on a different scale referring to parts illustrated in the previous section of figure 4;

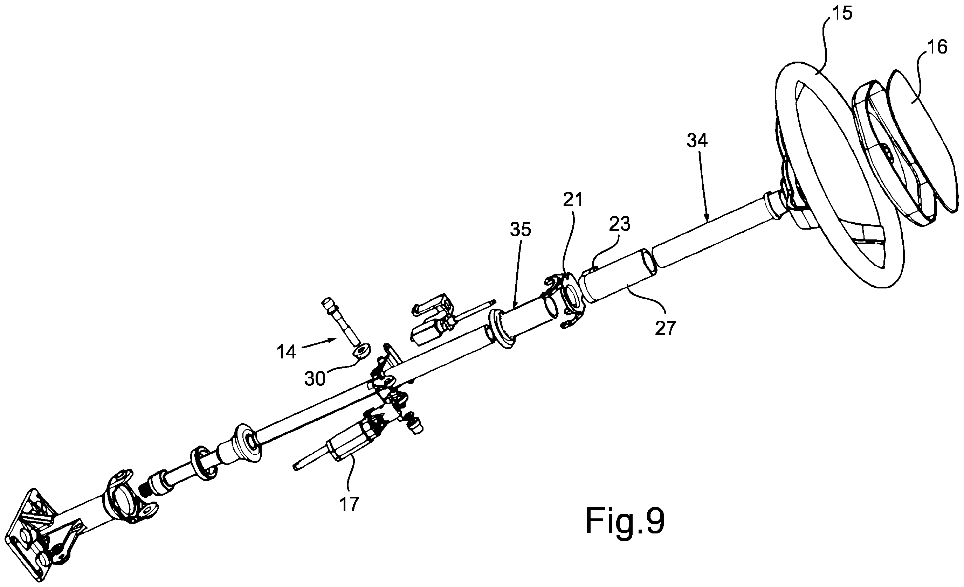

- figure 9 is an exploded perspective view of most of the components of the column of figure 3;

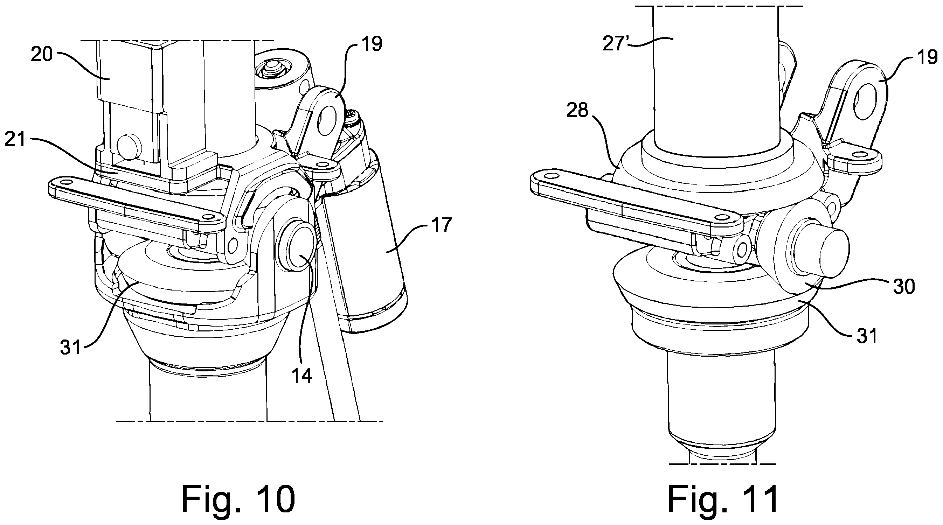

- figure 10 is an enlarged perspective view of the middle of the column where the tilting between the two main parts of the column takes place;
- figure 11 is a view showing details of figure 10 to more clearly illustrate the interaction between the parts.

With reference to the figures, these show in general a multifunctional tiltable steering column 11 for industrial vehicles, for example tractors, produced according to the present invention.

The steering column is equipped with an automatic angular and axial adjustment system, with a mechanical system suitable for allowing the normal rotation of the steering wheel, maintaining a central area of the same fixed, so that it can be set up with electrical or electronic controls, fixed in an ergonomic position for the driver using it.

The steering column 11 comprises a fixed lower part 12 and a tiltable upper part 13 articulated in the centre by means of a central articulation steering shaft 14.

The upper part 13 carries a steering wheel 15, made for example of light alloy and with a PU coating, with a low moment of inertia. A fixed dashboard 16 is positioned in the centre with respect to the steering wheel 15, bearing the various electrical and non-electrical controls and the various signalling lights and the like.

The upper part 13 can be tilted with respect to the lower part 12 by means of a linear actuator 17 or other control device, also manual, which controls the tiltable position. The linear actuator 17 is articulated at its ends between a lug 18 integral with the lower part 12 and a lug 19 integral with the upper part 13.

A second linear actuator 20 is positioned articulated at its ends between a lug 21 integral with a lower fixed outer casing 22 of the upper part 13 and a lug 23 integral with an upper part 27 of a telescopic sleeve, which can be moved with respect to the same lower outer casing 22.

Also in this case, the linear actuator can be substituted by another control device, also manual.

In this way, the control and adjustment of the axial position (in height) of the steering wheel 15 are effected.

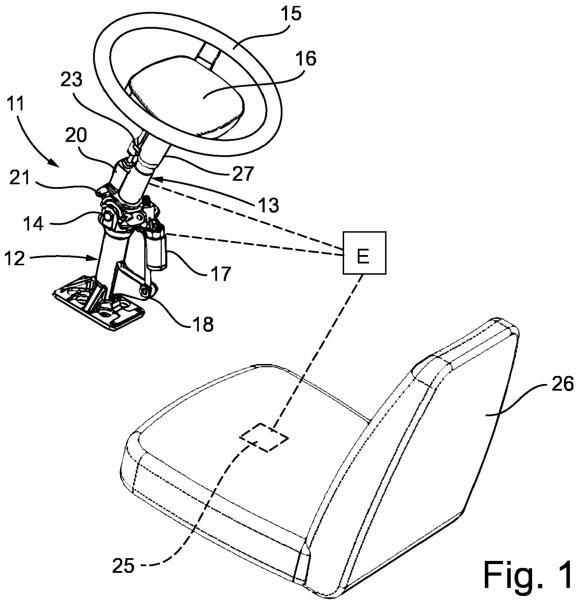

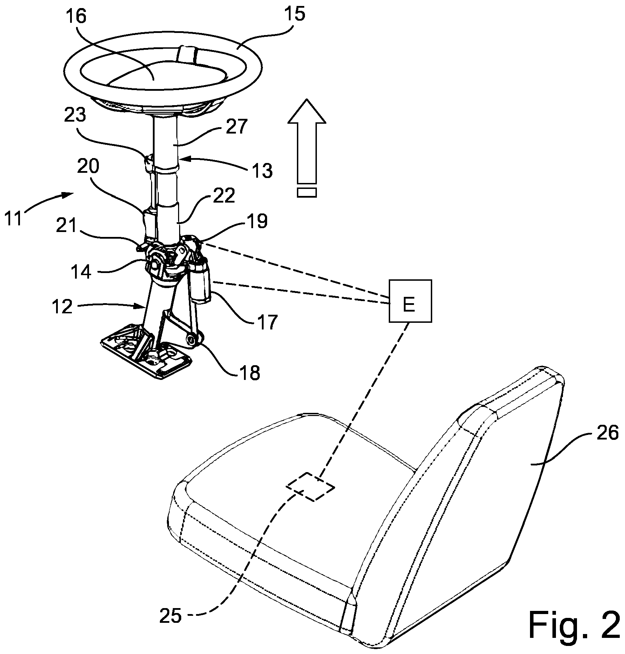

Figures 1 and 2 show how the tilted position of the column 11, or the upper part 13 bearing the steering wheel 15, can be obtained automatically. A presence detector 25 is in fact positioned in a seat 26 facing the column 11. Said presence detector 25 controls the above-mentioned linear actuator 17 by means of a processor E causing the inclination of the upper part 13 of the column 11 and the linear actuator 20 through the processor E causing the vertical positioning of the steering wheel 15. Furthermore, thanks to the presence of the detector, the disengagement of the column 11 is implemented automatically with respect to the seat 26, as shown in figure 2.

The column 11 automatically returns to the operative position of figure 1 which had been previously selected and memorized, only when the driver occupies the seat 26 again, thus acting on the presence detector 25. The processor E, in fact, stores a predetermined tilted position of the upper tiltable part 13 with respect to the lower fixed part 12 of the column 11 and restores it when the driver sits on the seat.

On examining the column 11 in greater detail, it can be observed that the steering wheel 15, through its spokes 29, is made integral with a rotating outer sleeve 27, 27' which, as already mentioned, is of the telescopic type. An upper outer part 27 of the sleeve is slidingly and axially associated with a lower inner part 27', said parts 27 and 27' being integral with each other with rotation. The inner part 27' of the sleeve integrally carries a first bevel gear 28, at one of its lower ends. Said bevel gear 28 collaborates with an idle bevel gear 30, positioned underneath, rotating on the shaft 14, which in turn engages with a bevel gear 31 which imparts rotation to an underlying steering pump (not shown). Said bevel gear 31 is operatively positioned on a bearing 24 interposed with respect to the lower part 12 of the steering column 11.

In this way, a homokinetic transmission of the rotating motion is achieved with extremely wide incidence angles, even >>45°.

The upper outer part 27 of the sleeve is rotatingly positioned on an upper bearing 32 and the lower inner part 27' of the sleeve rotates on a lower bearing 33.

An inner sleeve 34 integral above the dashboard 16, but only axially movable in lowering and lifting with respect to the upper part 13 of the steering column 11, slides inside the upper bearing 32. This movement of the inner sleeve 30, or of the dashboard 16, occurs when an adjustment in height of the steering wheel 15 is effected.

A tubular element 35 is positioned inside the lower bearing 33, which extends below into a base support 36 hinged to the central articulation steering shaft 14 and which acts as a support and centering for the rotation and oscillation of the parts.

It is therefore evident how a steering column is provided, which is easy to operate and which centrally contains the dashboard with the main operating signaling elements useful for the driver.

The provision of a column with an operating position memory and self-regulation facilitates the driving position of the driver, once he has effected the first adjustment of the parts and has reached his ideal driving position.

According to the present invention, in the field of industrial vehicles, and especially agricultural vehicles, this particular steering column has resolved the growing need for ever better ergonomics, especially on important and most commonly used commands.

The possibility of exploiting the central space of the steering wheel for accommodating a fixed area with the rotation of the same, on which to install various commonly used commands, is therefore extremely important. It also allows, in fact, other parts of the cab of the vehicle to be freed, simplifying its solutions and improving its aesthetics.

The steering column of the invention solves, with rationality and design robustness, with simplicity and overall functional integration, the above-mentioned problem of the "fixed centre".

The present invention therefore proposes a steering column ("retrofittable" to a conventional one) which has very small dimensions and a significant functional integration between the articulation joint for "tiltable adjustment" and the same fixed centre.

The column of the present invention also allows a considerable increase in the "tiltable" angle, which is such as to well exceed that which can usually be obtained with cardan joints commonly adopted in steering columns normally used on many vehicles.

A steering column is thus provided, equipped with automatic actuators for the total adjustment (tiltable and axial) of the steering wheel, for the automatic disengagement of the same and for the automatic recovery of the ergonomic position chosen by the operator.

Thanks to its structure, internal control wires can be passed in a steering column according to the invention without any problem.

The forms of the structure for providing a steering column of the invention, as also the materials and assembly modes, can naturally differ from those shown for purely illustrative and non-limiting purposes in the drawings.

The objective mentioned in the preamble of the description has therefore been achieved.

The protection scope of the present invention is defined by the enclosed claims.

## Claims

1. A multifunctional tiltable steering column for industrial vehicles comprising a lower fixed part (12) and an upper tiltable part (13) articulated by means of a central articulation steering shaft (14), said upper part (13) carrying a steering wheel (15), a dashboard (16) containing commands being positioned in the centre of said steering wheel (15), said dashboard being fixed with respect to the rotating steering wheel, said steering wheel (15) and said dashboard (16) being movable and axially adjustable with respect to said lower fixed part (12),
**characterized in that**
said steering wheel (15) extends downwards inside said upper tiltable part (13) in a sleeve (27,27') which bears, integral with a lower end, a first bevel gear (28) which is engaged with a second bevel gear (30), positioned idle on said shaft (14), wherein said second bevel gear (30) is, in turn, engaged with a third bevel gear (31) which imparts rotation to an underlying steering pump.

2. The steering column according to claim 1, **characterized in that** actuators (17,20) are provided, conceived for the tilting and axial movement of said upper tiltable part (13) with respect to said lower fixed part (12).

3. The steering column according to claim 1 or 2, **characterized in that** said upper part (13) can be tilted with respect to the lower part (12) by means of a linear actuator (17).

4. The steering column according to claim 1 or 2, **characterized in that** a second linear actuator (20) is positioned articulated at its ends between a lug (21) integral with a lower fixed outer casing (22) of the upper part (13) and a lug (23) integral with an upper part (27) of a telescopic sleeve which can be moved with respect to the lower outer casing (22) for the control and adjustment of the axial position (in height) of the steering wheel (15).

5. The steering column according to claim 4, **characterized in that** said telescopic sleeve comprises an upper outer part (27) of the sleeve which is slidingly and axially associated with a lower inner part (27'), integral with each other with rotation, wherein said inner part (27') of the sleeve integrally carries said first bevel gear (28), at one of its lower ends.

6. The steering column according to one or more of the previous claims 1-5, **characterized in that** said steering wheel (15) is produced in a light alloy with a PU coating, with a low moment of inertia.

7. The steering column according to one or more of the previous claims 1-6, **characterized in that** said steering column (11) faces a seat (26) of the vehicle wherein said seat comprises a presence detector (25) positioned in the same, which controls said actuators (17,20) for the inclination and axial movement of said upper tiltable part (13) with respect to said lower fixed part (12) by means of a processor (E).

8. The steering column according to claim 7, **characterized in that** said processor (E) stores a prefixed tilted position of the upper tiltable part (13) with respect to said lower fixed part (12) of the column (11) and restores it when the driver sits on said seat.

9. The steering column according to claim 7 or 8, **characterized in that** said processor (E) automatically actuates the disengagement of the column (11) with respect to the seat (26) when the driver leaves the seat (26).

## Patentansprüche

1. Multifunktionale verschwenkbare Lenksäule für Industriefahrzeuge, die einen unteren, feststehenden Teil (12) und einen oberen, verschwenkbaren Teil (13) umfasst, der mithilfe einer zentralen Gelenkverbindungslenkwelle (14) angelenkt ist, wobei der obere Teil (13) ein Lenkrad (15) und ein Armaturenbrett (16) mit Befehlen, das im Zentrum des Lenkrads (15) positioniert ist, trägt, wobei das Armaturenbrett an dem sich drehenden Lenkrad befestigt ist und das Lenkrad (15) und das Armaturenbrett (16) mit Bezug auf den unteren, feststehenden Teil (12) beweglich und axial verstellbar sind,
**dadurch gekennzeichnet, dass**
sich das Lenkrad (15) nach unten hin innerhalb des oberen, verschwenkbaren Teils (13) in einer Buchse (27, 27') erstreckt, welche ein erstes Kegelzahnrad (28) zusammengebaut mit einem unteren Ende trägt, welches mit einem zweiten Kegelzahnrad (30) in Eingriff steht, das frei laufend auf der Welle (14) positioniert ist, wobei das zweite Kegelzahnrad (30) wiederum mit einem dritten Kegelzahnrad (31) in Eingriff steht, welches eine Drehung auf eine darunterliegende Lenkungspumpe ausübt.

2. Lenksäule nach Anspruch 1, **dadurch gekennzeichnet, dass** Aktoren (17,20) bereitgestellt sind, die für die Verschwenk- und Axialbewegung des oberen, verschwenkbaren Teils (13) bezüglich des unteren, feststehenden Teils (12) konzipiert sind.

3. Lenksäule nach Anspruch 1 oder 2, **dadurch gekennzeichnet, dass** der obere Teil (13) mit Bezug auf den unteren Teil (12) mithilfe eines linearen Aktors (17) verschwenkt werden kann.

4. Lenksäule nach Anspruch 1 oder 2, **dadurch gekennzeichnet, dass** ein zweiter linearer Aktor (20) an seinen Enden angelenkt zwischen einem Vorsprung (21), der mit einem unteren, feststehenden Außengehäuse (22) des oberen Teils (13) zusammengebaut ist, und einem Vorsprung (23), der mit einem oberen Teil (27) einer Teleskopbuchse zusammengebaut ist, positioniert ist und der mit Bezug auf das untere Außengehäuse (22) zur Steuerung und Verstellung der axialen Position (in der Höhe) des Lenkrads (15) bewegt werden kann.

5. Lenksäule nach Anspruch 4, **dadurch gekennzeichnet, dass** die Teleskopbuchse ein oberes Außenteil (27) der Buchse umfasst, welches verschiebbar und axial mit einem unteren, inneren Teil (27') verbunden ist, die für eine Drehung miteinander zusammengebaut sind, wobei der innere Teil (27') der Buchse einstückig das erste Kegelzahnrad (28) an einem seiner unteren Enden trägt.

6. Lenksäule nach einem der vorstehenden Ansprüche 1-5, **dadurch gekennzeichnet, dass** das Lenkrad (15) in einer leichten Legierung mit PU-Beschichtung mit einem geringen Trägheitsmoment produziert ist.

7. Lenksäule nach einem der vorstehenden Ansprüche 1-6, **dadurch gekennzeichnet, dass** die Lenksäule (11) einem Sitz (26) des Fahrzeugs zugewandt ist, wobei der Sitz einen darin positionierten Anwesenheitsdetektor (25) umfasst, welcher die Aktoren (17, 20) für die Neigungsbewegung und die axiale Bewegung des oberen verschwenkbaren Teils (13) mit Bezug auf den unteren, feststehenden Teil (12) mithilfe eines Prozessors (E) steuert.

8. Lenksäule nach Anspruch 7, **dadurch gekennzeichnet, dass** der Prozessor (E) eine vorab festgelegte verschwenkte Position des oberen, verschwenkbaren Teils (13) mit Bezug auf den unteren, feststehenden Teil (12) der Säule (11) speichert und diese wiederhergestellt, wenn der Fahrer auf dem Sitz sitzt.

9. Lenksäule nach Anspruch 7 oder 8, **dadurch gekennzeichnet, dass** der Prozessor (E) das Außer-Eingriff-Stellen der Säule (11) mit Bezug auf den Sitz (26) automatisch betätigt, wenn der Fahrer den Sitz (26) verlässt.

## Revendications

1. Une colonne de direction multifonctionnelle inclinable pour des véhicules industriels, comprenant une partie inférieure fixe (12) et une partie supérieure inclinable (13) articulée au moyen d'un arbre de direction central articulé (14), ladite partie supérieure (13) portant un volant de direction (15), un tableau de bord (16) contenant des commandes étant positionné au centre dudit volant de direction (15), ledit tableau de bord étant fixe par rapport au volant de direction tournant, ledit volant de direction (15) et ledit tableau de bord (16) étant mobiles et réglables axialement par rapport à ladite partie inférieure fixe (12), **caractérisée en ce que** ledit volant de direction (15) s'étend vers le bas à l'intérieur de ladite partie supérieure inclinable (13) dans un fourreau (27, 27') qui porte, faisant corps avec une extrémité inférieure, un premier engrenage conique (28) qui est engrené avec un second engrenage conique (30), monté fou sur ledit arbre (14), ledit second engrenage conique (30) étant, à son tour, engrené avec un troisième engrenage conique (31) qui imprime une rotation à une pompe de direction située en dessous.

2. La colonne de direction selon la revendication 1, **caractérisée en ce que** des actionneurs (17, 20) sont prévus, conçus pour l'inclinaison et le mouvement axial de ladite partie supérieure inclinable (13) par rapport à ladite partie inférieure fixe (12).

3. La colonne de direction selon la revendication 1 ou 2, **caractérisée en ce que** ladite partie supérieure (13) peut être inclinée par rapport à la partie inférieure (12) au moyen d'un actionneur linéaire (17) .

4. La colonne de direction selon la revendication 1 ou 2, **caractérisée en ce qu'**un second actionneur linéaire (20) est positionné en étant articulé à ses extrémités entre un talon (21) faisant corps avec un carter extérieur inférieur fixe (22) de la partie supérieure (13) et un talon (23) faisant corps avec une partie supérieure (27) d'un fourreau télescopique qui peut être déplacé par rapport au carter extérieur inférieur (22) pour la commande et le réglage de la position axiale (en hauteur) du volant de direction (15) .

5. La colonne de direction selon la revendication 4, **caractérisée en ce que** ledit fourreau télescopique comprend une partie supérieure extérieure (27) du fourreau qui est associée de manière glissante et axiale à une partie inférieure intérieure (27'), faisant corps l'une avec l'autre en rotation, ladite partie intérieure (27') du fourreau portant, en faisant corps avec lui, ledit premier engrenage conique (28) à l'une de ses extrémités inférieures.

6. La colonne de direction selon une ou plusieurs des revendications précédentes 1-5, **caractérisée en ce que** ledit volant de direction (15) est réalisé dans un alliage léger avec un revêtement en PU, avec un faible moment d'inertie.

7. La colonne de direction selon une ou plusieurs des revendications précédentes 1 à 6, **caractérisée en ce que** ladite colonne de direction (11) fait face à un siège (26) du véhicule, ledit siège comprenant un détecteur de présence (25) positionné dans celui-ci, lequel commande lesdits actionneurs (17, 20) pour l'inclinaison et le mouvement axial de ladite partie supérieure inclinable (13) par rapport à ladite partie inférieure fixe (12) au moyen d'un processeur (E) .

8. La colonne de direction selon la revendication 7, **caractérisée en ce que** ledit processeur (E) mémorise une position inclinée préfixée de la partie supérieure inclinable (13) par rapport à ladite partie inférieure fixe (12) de la colonne (11) et la restaure lorsque le conducteur est assis sur ledit siège.

9. La colonne de direction selon la revendication 7 ou 8, **caractérisé en ce que** ledit processeur (E) actionne automatiquement le débrayage de la colonne (11) par rapport au siège (26) lorsque le conducteur quitte le siège (26).
